# EUROPEAN PATENT SPECIFICATION

(11) **EP 4 611 522 B1**
(45) Date of publication and mention of the grant of the patent: **21.10.2026**
(21) Application number: 23818085.5
(22) Date of filing: 03.11.2023
(51) Int. Cl.: A01C 7/20, A01C 5/06, A01C 7/08, A01C 7/06, A01C 15/04

(54) **PNEUMATIC DISTRIBUTOR ELEMENT FOR GRANULAR AND/OR POWDERED MATERIALS AND PNEUMATIC DISTRIBUTING MACHINE FOR SUCH MATERIALS INCLUDING SAID ELEMENT**
PNEUMATISCHES VERTEILERELEMENT FÜR KÖRNIGES UND/ODER PULVERFÖRMIGES MATERIAL UND PNEUMATISCHE VERTEILMASCHINE FÜR DERARTIGE MATERIALIEN MIT DIESEM ELEMENT
ÉLÉMENT DISTRIBUTEUR PNEUMATIQUE POUR MATIÈRES GRANULAIRES ET/OU EN POUDRE ET MACHINE DE DISTRIBUTION PNEUMATIQUE POUR DE TELLES MATIÈRES COMPRENANT LEDIT ÉLÉMENT

(30) Priority: 04.11.2022 IT 202200022788
(43) Date of publication of application: 10.09.2025
(73) Proprietor: Maschio Gaspardo S.p.A., 35011 Campodarsego (PD) (IT)
(72) Inventor: MASCHIO, Andrea, 33075 Morsano Al Tagliamento (PN) (IT); MARTIN, Rudy, 35142 Padova (IT); MOGLIONI, Mario, 33078 San Vito al Tagliamento (PN) (IT)
(74) Representative: Milan, Guglielmo
(86) International application number: PCT/IB2023/061116
(87) International publication number: WO 2024/095225

(56) References cited:
- WO-A1-2010/121881
- DE-B3- 102006 062 328
- US-A- 4 911 090
- US-A1- 2012 079 973

## Description

### Technical field

The invention relates to a pneumatic distributor element for granular and/or powdered materials and a pneumatic distributor machine for such materials including the element. It may be noted that, in the present context, the term "granular and/or powdered materials" is intended to be understood to be preferably both fertilizers and seeds.

### Technological background

The above-mentioned machines are normally used for the precise distribution of seeds and/or fertilizers and use a plurality of distributor elements which are secured at intervals to an element-carrying bar. The granular and/or powdered material is contained in tanks or hoppers from which it is supplied by means of a volumetric dispenser to a pneumatic transport system. The transport system therefore pneumatically transfers the material to each distributor element by means of suitable tubes in order to be supplied at the desired depth in a furrow which is formed by a coulter in the ground. The known machines in the field have a main disadvantage in that they do not provide an easy system for discharging the compressed air which is used for pneumatically transporting the material in the tubes once it has reached the respective distribution collector. In practice, the compressed air is caused to leave the supply opening with substantial disadvantages.

In the first place, this system generates a great counter-pressure for the pneumatic distribution collector, in which the pneumatic transport tubes converge. This counter-pressure involves an undesirable waste of energy, necessitating a greater operating pressure for the compressed air which is used for transporting the material.

Furthermore, the supply of the air is conveyed towards the ground, in the region of the supply opening for the granular and/or powdered material or, at most, towards the rear portion of the coulter (at the opposite side to the advance direction).

The two actions both involve the possibility that the granular and/or powdered material which is distributed on the ground is lifted by the air turbulence and thrown outside the open distribution furrow by the coulter, in practice significantly compromising the depositing precision and therefore the efficacy of the machine. When seed is supplied, the sowing operation as a whole may even be compromised as a result of the effect of the lacking or insufficient burying of the seed.

In order to overcome these disadvantages, it has been proposed to provide the distributor elements with small cyclone devices (seed brakes, see https://www.youtube.com/watch?v=Nan8DhFsNRs), which allow granules and powders which are pneumatically transported by the transport air flow to be separated. However, these devices are bulky, require in turn a falling pipe for the granular and/or powdered material, are subjected to great friction wear (which causes premature breakage thereof) and therefore do not provide a really functional solution.

Examples of pneumatic distributor elements for seeds are described in US2012/079973A1, US4911090A, WO2010/121881A1 or WO2020/227670A2.

### Description of the invention

The problem addressed by the present invention is to provide a pneumatic distributor element for granular and/or powdered materials and a pneumatic distributor machine for such materials which are structurally and functionally configured to overcome at least some of the disadvantages set out with reference to the cited prior art. An object of the present invention is also to solve the problems of the cited prior art by providing a rational solution with contained costs. This problem is solved and this object is achieved by a pneumatic distributor element for granular and/or powdered materials and a pneumatic distributor machine for such materials constructed according to one or more of the appended claims.

The pneumatic distributor element for granular and/or powdered materials, in particular fertilizers and/or seeds, comprises a support which carries a coulter and at least one pneumatic distribution collector for the granular and/or powdered material. It may be noted that, in the present context, the term "granular and/or powdered material" is intended to be understood to be preferably fertilizers and/or seeds.

The collector is fixed to the support closely behind the coulter. It may be noted that, in this context, the term "closely behind" is intended to be understood to preferably mean that the collector can be positioned in contact with the surface of the coulter or preferably at a distance sufficiently near the surface of the coulter so as to minimize the lateral spatial requirement of the collector but without generating interference between the collector and coulter.

There is defined in the collector at least one supply opening for the granular and/or powdered material. There is further formed on the collector a discharge opening for the pneumatic transport air, which is formed in a wall of the collector in a position different from the supply opening in order to discharge in a different position from the supply opening the pneumatic transport air of the granular and/or powdered material.

In this manner, the granular and/or powdered material is substantially released by falling or with a reduced pneumatic propulsion thrust through the supply opening. It is therefore slowed down with respect to the transport speed and the transport air flow of the material is instead discharged at a different position from the supply opening without it disturbing this release.

In a preferred embodiment, the discharge opening for the pneumatic transport air is formed in the wall of the collector in a distal position from the supply opening in order to discharge in a distal position from the supply opening the pneumatic transport air of the granular and/or powdered material. It may be noted that, in this context, the term "distal position" is preferably intended to be understood to be a position different from the position of the supply opening and spaced apart therefrom sufficiently not to disturb the release of the granular and/or powdered material.

The wall in which the discharge opening is formed is exclusively the wall opposite the coulter. In this manner, the air is discharged laterally with respect to the furrow which is formed by the coulter in the ground, minimizing the turbulence and the air flow near the supply opening for the granular and/or powdered material.

The coulter is of the type with a disk which is rotatably mounted on the support. This type of coulter allows optimization of the capacity for burying the granular and/or powdered material.

In some embodiments, the distributor element further comprises a scraper of the disk type coulter. It will be appreciated that the scraper prevents adhesion of earth and crop residues to the coulter by scraping the surface thereof which faces the collector.

In an exemplary embodiment, the collector comprises at least one coupling for a pneumatic transport tube for granular and/or powdered material. In this manner, at least one tube can be coupled in the collector.

Preferably, the collector comprises two couplings for respective tubes. In this manner, there can be two tubes which reach the collector and which are coupled therein so as to be able to readily transport different granular and/or powdered materials, for example, a fertilizer and a seed. These tubes may advantageously be independent.

In some embodiments, the collector comprises a conveyor which extends so as to taper from the at least one coupling towards the supply opening. Advantageously, the conveyor has a cross-section which is open towards the discharge opening. As a result of the conveyor, the granular and/or powdered material can be transported towards the furrow which is marked out by the coulter with the greatest precision.

Preferably, the supply opening is located between the coulter and the collector, more particularly between the coulter and the wall, in which the discharge opening is formed. Furthermore, preferably, the supply opening is located below the collector. In some embodiments, the supply opening is directed towards the rear portion of the coulter, that is to say, at the opposite side to the advance direction. Furthermore, it is preferable for the supply opening to be directed towards the external edge of the disk type coulter. It is further preferable for the supply opening to involve an angular segment of the disk type coulter. Preferably, the discharge opening is protected by a screen or the like. In this manner, the undesirable introduction of earth and the accidental discharge of granular and/or powdered material through the discharge opening are prevented.

In some embodiments, the discharge opening can be throttled. It is thereby possible to adjust the discharged air flow. The throttling of the discharge opening can be particularly advantageous for reducing the discharged air flow when it is necessary to supply material (for example, seeds) which, being light, requires a greater pneumatic propulsive thrust. Vice versa, the discharged air flow can be greater when it is necessary to supply material (for example, fertilizer) which, being heavier, can be released substantially by falling. Preferably, the discharge opening extends at least partially at a greater height with respect to the maximum penetration depth of the coulter into the ground. In this manner, the earth is prevented from being able to obstruct the discharge opening by bringing about a counter-pressure with respect to the distribution collector.

In one aspect, the present invention further relates to a pneumatic distributor machine, including an element-carrying bar and a plurality of distributor elements which are secured at intervals along the bar. The distributor elements may have one or more of the above-mentioned features.

Additional features which may be combined with the ones set out above are described in detail below with reference to preferred embodiments of the invention.

### Brief description of the drawings

The features and advantages of the invention will be better appreciated from the following detailed description of a number of preferred though non-exclusive embodiments thereof with reference to the appended drawings, in which:
- Figure 1 is a schematic illustration of a machine comprising at least one pneumatic distributor element according to the invention;

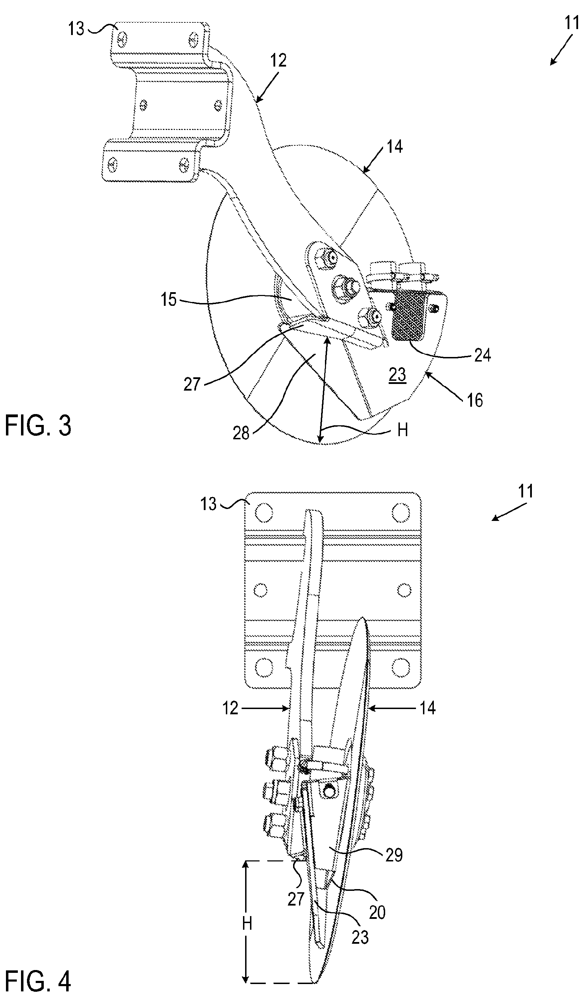

- Figures 2 and 3 are perspective views of the pneumatic distributor element of the machine of Figure 1;
- Figure 4 is a rear view of the pneumatic distributor element of the machine of Figure 1;
- Figure 5 is an exploded view of the pneumatic distributor element of the machine of Figure 1.

### Preferred embodiment of the invention

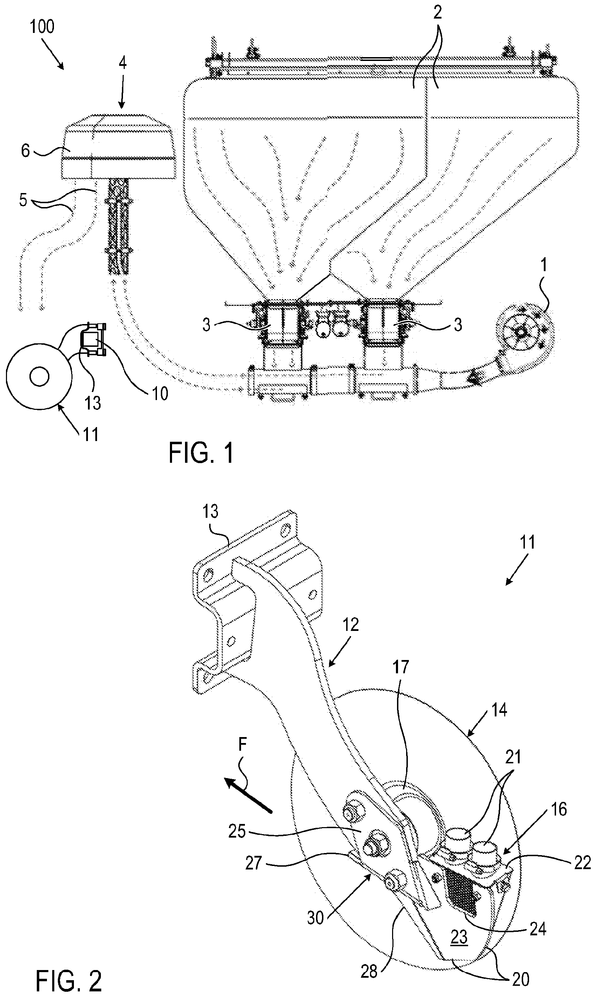

In Figure 1, there is generally designated 100 a pneumatic distributor machine for granular and/or powdered materials. Typically, these materials include seeds and fertilizers which have to be distributed in the ground, preferably though not necessarily, by burying them at a desired depth.

The machine 100 preferably comprises at least one compressor or fan 1 for generating a compressed air flow, one or more tanks 2 for the granular and/or powdered material to be distributed, a corresponding number of volumetric metering members 3 which meter the material which is supplied from the tanks to a respective pneumatic distributor 4 and a series of tubes 5 which branch off from a head 6 of the pneumatic distributor in order to transport the material(s) to be supplied as will be explained below.

The machine 100 further comprises at least one element-carrying bar 10 on which a plurality of pneumatic distributor elements 11 are mounted. According to a preferred embodiment, each element 11 comprises a support 12 which is preferably formed in the manner of a curved member and which carries at a first end a member 13 for fixing to the bar 10, for example by means of counter-plates. The support may be fixed to the machine in other manners, in accordance with technologies known per se, so as to distribute the elements 11 in a manner spaced apart at intervals and preferably adjustably along the bar 10.

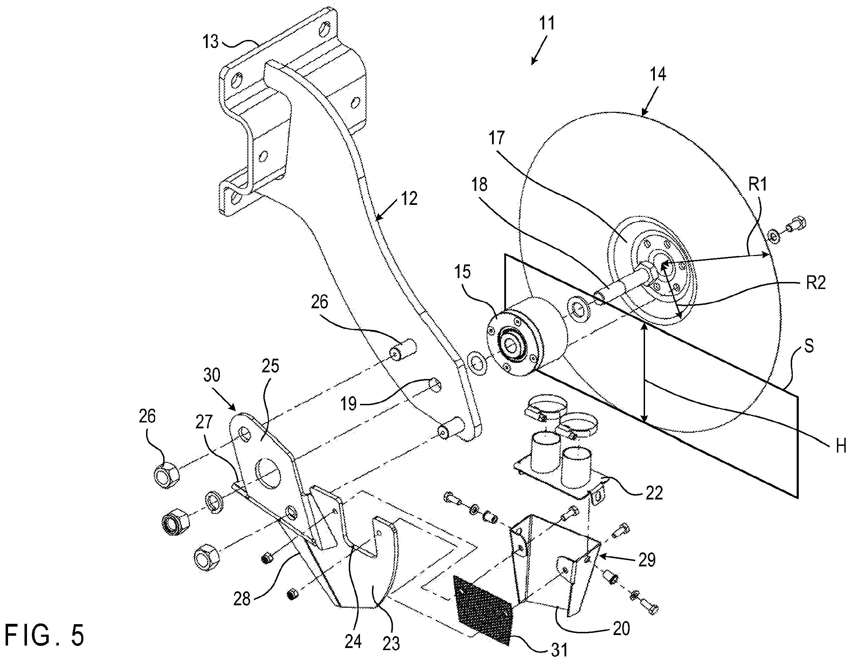

At a second end of the support 12 opposite the fixing member 13, there is mounted a coulter 14, which is preferably of the disk type and which is rotatable with respect to the support 12. Preferably, the coulter 14 is mounted so as to be rotatable with respect to the support 12 by means of a bearing system 15. The bearing system 15 is preferably interposed between the coulter 14 and the second end of the support 12. In a preferred example, the support 12 develops radially from the axis of the coulter towards the first end which carries the fixing member 13. There is further provision for using coulters which are fixed or of other types although the disk type coulter constitutes the preferred solution. The disk type coulter 14 preferably has a central bulge 17 in which the bearing system 15 is preferably at least partially received. The whole is preferably retained by means of a pin 18 which is secured to the support 12 in a through-hole 19. The outermost circumferential edge of the bulge 17 preferably defines a height of maximum penetration of the coulter 14 into the ground. In other words, as shown in the example of Figure 5, the disk type coulter is constructed to penetrate the ground S in order to bury the supplied granular and/or powdered material up to a maximum depth H which is equal to the radius R1 of the disk type coulter which may be reduced by the radius R2 of the bulge.

A distribution collector 16 for the granular and/or powdered material is preferably fixed to the second end of the distal support 12 by the fixing member 13 slightly behind the facing surface of the coulter 14. In an exemplary embodiment, the collector has a box-shaped formation and is open in the lower region (particularly towards the external edge of the disk type coulter) with a supply opening 20. At the opposite side (that is to say, in the upper region), the collector is closed by an upper wall 22 which carries at least one and preferably two couplings 21 for respective pneumatic transport tubes 5 for the granular and/or powdered material. Preferably, at the side opposite the coulter 14 there is formed a side wall 23 which may be substantially planar and which is affected by a discharge opening 24 which is arranged near the upper wall 22 and is therefore distal from the supply opening 20.

It may be noted that the coulter 14 has an advance direction F along which it advances while cutting the earth. The discharge opening 24 is preferably transverse with respect to the advance direction F, while the supply opening 20 is preferably directed towards the rear portion of the coulter 14, that is to say, at the opposite side to the advance direction F.

It may further be noted that the discharge opening 24 may be arranged at a specific radial distance from the axis of the disk type coulter. In particular, the radial position of the discharge opening 24 with respect to the axis of the coulter is between the outermost circumferential edge of the bulge 17 and the external edge of the coulter 14.

The discharge opening 24 allows discharge in a distal position from the supply opening 20 of the pneumatic transport air of the granular and/or powdered material. It may further be observed that the discharge opening 24 at least partially extends up to a greater height with respect to the depth H of maximum penetration of the coulter in the ground (as defined above) so that the air which is expelled through the discharge opening 24 is supplied laterally to the furrow which is marked out by the coulter.

In this manner, the granular and/or powdered material is released substantially by falling or with reduced pneumatic propulsion thrust through the supply opening 20. The transport air flow of the material is instead discharged at a distal position from the supply opening 20 without the air flow disturbing this release. This allows excess pressure of the air in the region of the supply opening 20 to be avoided. Naturally, a reduced pneumatic propulsion thrust may be present in any case through the supply opening 20. However, the discharge of air through the discharge opening 24 upstream of the supply opening 20 reduces the pressure of the transport flow before the transport flow reaches the supply opening 20 and therefore prevents the supplied material from being urged outside the furrow which is formed by the coulter 14 as a result of excess pressure.

Conversely, the supply opening 20 may at least partially extend to a lower height with respect to the depth H of maximum penetration of the coulter. In this manner, the granular and/or powdered material may be supplied directly to the furrow which is marked out by the coulter 14.

The wall 23 in which the discharge opening 24 is formed is exclusively the wall opposite the coulter. In this manner, the air which is used for the pneumatic transport is completely or at least partially discharged laterally with respect to the furrow which is formed by the coulter in the ground, minimizing the turbulence and the air flow near the supply opening of the granular and/or powdered material.

Preferably, the discharge opening 24 has a passage cross-section which is greater than the passage cross-section of the supply opening 20. This greatly limits the air flow which is directed towards and discharged through the supply opening 20, preventing the air flow from being able to cause the supplied granular and/or powdered material to leave the furrow which is marked out by the coulter 14.

Preferably, the wall 23 is fixedly joined to or is an integral part of a flange 30 which is in turn preferably shaped so as to form:
- an attachment plate 25 with which the flange 30 is fixed, for example, by means of screw/bolt connections 26 to the second end of the support 12; and/or
- a runner 27 which acts as protection of the bearing system 15, in which the runner preferably develops in the advance direction F and is preferably located at the height of the depth H of maximum penetration of the coulter 14 in the ground; and/or
- a scraper 28 which serves to prevent the adhesion of earth and crop residues to the coulter 14 by scraping the surface thereof facing the collector 16.

Preferably, the attachment plate 25 is reversibly fixed to the second end of the support 12 at the opposite side to the coulter 14. It is thereby possible to mount and dismount the flange 30 and the coulter 14 independently.

In some embodiments, the attachment plate 25 projects from the wall 23 and is arranged before the discharge opening 24 with respect to the advance direction F of the coulter 14 in the ground so as to protect it.

Preferably, the opening 24 is protected by a screen or net 31 which can extend flush with the wall 23.

Optionally the discharge opening 24 of the air may be provided with an adjustment system, for example with a shutter for throttling the discharged air flow.

As shown in the exemplary embodiment of Figure 5, the collector 16 may comprise a conveyor 29 which is configured to convey the granular and/or powdered material from the couplings 21 of the tubes towards the supply opening 20. The conveyor 29 is preferably interposed between the coulter 14 and the side wall 23 and preferably extends from the upper wall 22 to the supply opening 20. It may have a cross-section which is, for example, quadrangular and which is advantageously open towards the discharge opening 24 and is preferably closed along the remainder of its perimeter. The conveyor 29 is preferably tapered in the direction from the upper wall 22 towards the supply opening 20 so as to convey the granular and/or powdered material with greater precision.

The conveyor 29 may be fixed to the upper wall 22 and/or the side wall 23, preferably in a removable manner, for example, by means of bolted connections. The operation of the machine 100 and the pneumatic distributor elements 11 is as follows.

The granular and/or powdered material to be distributed is supplied in a metered manner from the tanks 2 through the volumetric metering members 3 in order to be supplied in a manner known per se to the corresponding pneumatic distributor 4 and in particular to the head 6 in order to reach the tubes 5. By means of the compressed air flow which is generated by the compressor or fan 1, the material arrives from the head 6 at the tubes 5 in order to be pneumatically conveyed to the distributor elements 11 and to be distributed in the ground, where applicable burying it at the desired depth.

The burying is carried out in the furrow which is marked out by the disk type coulter 14.

The granular and/or powdered material is directed to the collector 16. At this location, the transport air is at least partially vented through the discharge opening 24, decelerating the product to be supplied. The granular and/or powdered material therefore falls through the supply opening 20 where applicable accompanied by an air flow which is significantly slowed down with respect to the transport speed and the pressure in the tubes 5. Simultaneously, the transport air is discharged laterally through the discharge opening 24.

The invention thereby solves the problem set out with a solution which is practical, inexpensive and compact at the same time.

The advantages of the solution proposed include the fact that the collector is subjected to very limited wear and substantially does not require any maintenance.

## Claims

1. A pneumatic distributor element (11) for granular and/or powdered materials, in particular fertilizers and/or seeds, comprising a support (12) which carries a disk type coulter (14) which is rotatably mounted on the support (12) and at least one pneumatic distribution collector (16) for the granular and/or powdered material which is fixed to the support (12) closely behind the coulter (14), there being defined in the collector (16) at least one supply opening (20) for the granular and/or powdered material, wherein it comprises a discharge opening (24) which is formed in a wall (23) of the collector in a position different from the supply opening (20) in order to discharge in a different position from the supply opening (20) the pneumatic transport air of the granular and/or powdered material, **characterized in that** the wall (23) in which the discharge opening (24) for the air is formed is exclusively the wall opposite the coulter (14).

2. The pneumatic distributor element (11) according to claim 1, wherein the discharge opening (24) is formed in a distal position from the supply opening (20) in order to discharge in a distal position from the supply opening (20) the pneumatic transport air of the granular and/or powdered material.

3. The pneumatic distributor element (11) according to claim 1 or 2, comprising a scraper (28) of the disk type coulter.

4. The pneumatic distributor element (11) according to claim 3, wherein the wall (23) is fixedly joined to or is an integral part of a flange (30) which is in turn shaped so as to form the scraper (28).

5. The pneumatic distributor element (11) according to one or more of the preceding claims, wherein the collector (16) comprises at least one coupling (21) for a pneumatic transport tube for granular and/or powdered material.

6. The pneumatic distributor element (11) according to claim 5, wherein the collector (16) comprises at least two couplings (21) for respective independent pneumatic transport tubes for granular and/or powdered material.

7. The pneumatic distributor element (11) according to claim 5 or claim 6, wherein the collector (16) comprises a conveyor (29) which extends so as to taper from the at least one coupling (21) towards the supply opening (20), the conveyor (29) having a cross-section which is open towards the discharge opening (24).

8. The pneumatic distributor element (11) according to one or more of the preceding claims, wherein the supply opening (20) is located between the coulter (14) and the wall (23) of the collector.

9. The pneumatic distributor element (11) according to one or more of the preceding claims, wherein the discharge opening (24) is protected by a screen (31).

10. The pneumatic distributor element (11) according to one or more of the preceding claims, wherein the discharge opening (24) can be throttled.

11. The pneumatic distributor element (11) according to one or more of the preceding claims, wherein the discharge opening (24) extends at least partially at a greater height with respect to the maximum penetration depth (H) of the coulter (14).

12. The pneumatic distributor element (11) according to one or more of the preceding claims, wherein the coulter (14) has an advance direction (F) in which the coulter is configured to advance, cutting the earth, the discharge opening (24) being transverse with respect to the advance direction (F).

13. The pneumatic distributor element (11) according to one or more of the preceding claims, wherein the disk type coulter (14) has a central bulge (17), the discharge opening (24) being arranged at a radial distance from the axis of the disk type coulter so that the radial position of the discharge opening (24) with respect to the axis of the coulter is between the outermost circumferential edge of the bulge (17) and the external edge of the coulter (14).

14. The pneumatic distributor element (11) according to one or more of the preceding claims, wherein the discharge opening (24) has a passage cross-section greater than the passage cross-section of the supply opening (20).

15. A pneumatic distributor machine (100) for granular and/or powdered materials, in particular fertilizers and/or seeds, including an element-carrying bar (10) and a plurality of pneumatic distributor elements (11) according to one or more of the preceding claims, which are secured at intervals along the bar (10).

## Patentansprüche

1. Pneumatisches Verteilerelement (11) für körnige und/oder pulverförmige Materialien, insbesondere Düngemittel und/oder Saatgut, mit einem Träger (12), der eine scheibenförmige Schneidklinge (14) trägt, die drehbar auf dem Träger (12) montiert ist und zumindest einem pneumatischen Verteiler-Sammler (16) für das körnige und/oder pulverförmiges Material, der dicht hinter der Schneidklinge (14) am Träger (12) befestigt ist, wobei im Sammler (16) zumindest eine Zuführöffnung (20) für das körnige und/oder pulverförmige Material ausgebildet ist, wobei es eine Abgabeöffnung (24) aufweist, die in einer Wand (23) des Sammlers an einer anderen Position als die Zuführöffnung (20) ausgebildet ist, um die pneumatische Transportluft des körnigen und/oder pulverförmigen Materials an einer anderen Position als die Zuführöffnung (20) abzugeben, **dadurch gekennzeichnet, dass** die Wand (23), in der die Abgabeöffnung (24) für die Luft ausgebildet ist, ausschließlich die der Schneidklinge (14) gegenüberliegende Wand ist.

2. Pneumatisches Verteilerelement (11) nach Anspruch 1, wobei die Abgabeöffnung (24) in einer distalen Position von der Zuführöffnung (20) ausgebildet ist, um die pneumatische Transportluft des körnigen und/oder pulverförmigen Materials in einer distalen Position von der Zuführöffnung (20) abzugeben.

3. Pneumatisches Verteilerelement (11) nach Anspruch 1 oder 2, das einen Abstreifer (28) der scheibenförmigen Schneidklinge aufweist.

4. Pneumatisches Verteilerelement (11) nach Anspruch 3, wobei die Wand (23) fest mit einem Flansch (30) verbunden ist oder ein einstückiger Bestandteil davon ist, der wiederum derart geformt ist, um den Abstreifer (28) zu bilden.

5. Pneumatisches Verteilerelement (11) nach einem oder mehreren der vorhergehenden Ansprüche, wobei der Sammler (16) zumindest einen Anschluss (21) für ein pneumatisches Transportrohr für körniges und/oder pulverförmiges Material aufweist.

6. Pneumatisches Verteilerelement (11) nach Anspruch 5, wobei der Sammler (16) zumindest zwei Anschlüsse (21) für jeweils unabhängige pneumatische Transportrohre für körniges und/oder pulverförmiges Material aufweist.

7. Pneumatisches Verteilerelement (11) nach Anspruch 5 oder Anspruch 6, wobei der Sammler (16) ein Förderelement (29) aufweist, der sich derart erstreckt, um sich von dem zumindest einen Anschluss (21) in Richtung der Zuführöffnung (20) zu verjüngen, wobei das Förderelement (29) einen Querschnitt aufweist, der zur Abgabeöffnung (24) hin offen ist.

8. Pneumatisches Verteilerelement (11) nach einem oder mehreren der vorhergehenden Ansprüche, wobei die Zuführöffnung (20) zwischen der Schneidklinge (14) und der Wand (23) des Sammlers angeordnet ist.

9. Pneumatisches Verteilerelement (11) nach einem oder mehreren der vorhergehenden Ansprüche, wobei die Abgabeöffnung (24) durch ein Sieb (31) geschützt ist.

10. Pneumatisches Verteilerelement (11) nach einem oder mehreren der vorhergehenden Ansprüche, wobei die Abgabeöffnung (24) drosselbar ist.

11. Pneumatisches Verteilerelement (11) nach einem oder mehreren der vorhergehenden Ansprüche, wobei sich die Abgabeöffnung (24) zumindest teilweise in einer größeren Höhe in Bezug auf die maximale Eindringtiefe (H) der Schneidklinge (14) erstreckt.

12. Pneumatisches Verteilerelement (11) nach einem oder mehreren der vorhergehenden Ansprüche, wobei die Schneidklinge (14) eine Vorschubrichtung (F) aufweist, in der die Schneidklinge eingerichtet ist, um sich vorwärts zu bewegen und die Erde zu schneiden, wobei die Abgabeöffnung (24) quer zur Vorschubrichtung (F) verläuft.

13. Pneumatisches Verteilerelement (11) nach einem oder mehreren der vorhergehenden Ansprüche, wobei die scheibenförmige Schneidklinge (14) eine zentrale Ausbuchtung (17) aufweist, wobei die Abgabeöffnung (24) in einem radialen Abstand von der Achse der scheibenförmigen Schneidklinge angeordnet ist, so dass die radiale Position der Abgabeöffnung (24) in Bezug auf die Achse der Schneidklinge zwischen der äußersten Umfangskante der Ausbuchtung (17) und der Außenkante der Schneidklinge (14) liegt.

14. Pneumatisches Verteilerelement (11) nach einem oder mehreren der vorhergehenden Ansprüche, wobei die Abgabeöffnung (24) einen Durchgangsquerschnitt aufweist, der größer ist als der Durchgangsquerschnitt der Zuführöffnung (20).

15. Pneumatische Verteilermaschine (100) für körnige und/oder pulverförmige Materialien, insbesondere Düngemittel und/oder Saatgut, die eine Elementtragende Stange (10) und eine Mehrzahl pneumatischer Verteilerelemente (11) nach einem oder mehreren der vorhergehenden Ansprüche umfasst, die in Abständen entlang der Stange (10) befestigt sind.

## Revendications

1. Élément de distribution pneumatique (11) pour matériaux granulaires et/ou en poudre, en particulier des engrais et/ou des semences, comprenant un support (12) qui porte un coutre à disque (14) monté de manière rotative sur le support (12) et au moins un collecteur de distribution pneumatique (16) pour le matériau granulaire et/ou en poudre, qui est fixé au support (12) immédiatement derrière le coutre (14), au moins une ouverture d'alimentation (20) pour le matériau granulaire et/ou en poudre étant définie dans le collecteur (16), dans lequel il comprend une ouverture d'évacuation (24) formée dans une paroi (23) du collecteur dans une position différente de celle de l'ouverture d'alimentation (20) afin d'évacuer, dans une position différente de celle de l'ouverture d'alimentation (20), l'air de transport pneumatique du matériau granulaire et/ou en poudre, **caractérisé en ce que** la paroi (23) dans laquelle est formée l'ouverture d'évacuation (24) pour l'air est exclusivement la paroi opposée au coutre (14).

2. Élément de distribution pneumatique (11) selon la revendication 1, dans lequel l'ouverture d'évacuation (24) est formée à une position distale par rapport à l'ouverture d'alimentation (20) afin d'évacuer, à une position distale par rapport à l'ouverture d'alimentation (20), l'air de transport pneumatique du matériau granulaire et/ou en poudre.

3. Élément de distribution pneumatique (11) selon la revendication 1 ou 2, comprenant un racleur (28) du coutre à disque.

4. Élément de distribution pneumatique (11) selon la revendication 3, dans lequel la paroi (23) est solidaire d'une bride (30) ou en fait partie intégrante, laquelle bride est quant à elle conformée de manière à former le racleur (28).

5. Élément de distribution pneumatique (11) selon l'une ou plusieurs des revendications précédentes, dans lequel le collecteur (16) comprend au moins un raccord (21) destiné à un tube de transport pneumatique pour des matériaux granulaires et/ou en poudre.

6. Élément de distribution pneumatique (11) selon la revendication 5, dans lequel le collecteur (16) comprend au moins deux raccords (21) destinés à des tubes de transport pneumatique indépendants respectifs pour des matériaux granulaires et/ou en poudre.

7. Élément de distribution pneumatique (11) selon la revendication 5 ou la revendication 6, dans lequel le collecteur (16) comprend un convoyeur (29) qui s'étend en s'effilant depuis l'au moins un raccord (21) vers l'ouverture d'alimentation (20), le convoyeur (29) présentant une section transversale ouverte vers l'ouverture d'évacuation (24).

8. Élément de distribution pneumatique (11) selon l'une ou plusieurs des revendications précédentes, dans lequel l'ouverture d'alimentation (20) est située entre le coutre (14) et la paroi (23) du collecteur.

9. Élément de distribution pneumatique (11) selon l'une ou plusieurs des revendications précédentes, dans lequel l'ouverture d'évacuation (24) est protégée par un tamis (31).

10. Élément de distribution pneumatique (11) selon l'une ou plusieurs des revendications précédentes, dans lequel l'ouverture d'évacuation (24) peut être étranglée.

11. Élément de distribution pneumatique (11) selon l'une ou plusieurs des revendications précédentes, dans lequel l'ouverture d'évacuation (24) s'étend, au moins partiellement, à une hauteur supérieure à la profondeur de pénétration maximale (H) du coutre (14).

12. Élément de distribution pneumatique (11) selon l'une ou plusieurs des revendications précédentes, dans lequel le coutre (14) présente une direction d'avancement (F) dans laquelle il est conçu pour avancer en coupant le sol, l'ouverture d'évacuation (24) étant transversale par rapport à la direction d'avancement (F).

13. Élément de distribution pneumatique (11) selon l'une ou plusieurs des revendications précédentes, dans lequel le coutre à disque (14) présente un renflement central (17), l'ouverture d'évacuation (24) étant disposée à une distance radiale de l'axe du coutre à disque, de telle sorte que la position radiale de l'ouverture d'évacuation (24) par rapport à l'axe du coutre se situe entre le bord circonférentiel le plus extérieur du renflement (17) et le bord extérieur du coutre (14).

14. Élément de distribution pneumatique (11) selon l'une ou plusieurs des revendications précédentes, dans lequel l'ouverture d'évacuation (24) présente une section transversale de passage supérieure à celle de l'ouverture d'alimentation (20).

15. Machine de distribution pneumatique (100) pour des matériaux granulaires et/ou en poudre, en particulier des engrais et/ou des semences, comprenant une barre porte-éléments (10) et une pluralité d'éléments de distribution pneumatiques (11) selon l'une ou plusieurs des revendications précédentes, qui sont fixés à intervalles le long de la barre (10).
